# EUROPÄISCHE PATENTANMELDUNG

(11) **EP 3 778 125 A1**
(43) Veröffentlichungstag der Anmeldung: **17.02.2021**
(21) Anmeldenummer: 20185482.5
(22) Anmeldetag: 13.07.2020
(51) Int. Cl.: B25B 31/00, F16B 13/06

(54) **SETZWERKZEUG, MONTAGEANORDNUNG UND VERFAHREN ZUM SETZEN EINES SPREIZANKERS**

(30) Priorität: 14.08.2019 DE 102019121907
(71) Anmelder: fischerwerke GmbH & Co. KG, 72178 Waldachtal (DE)
(72) Erfinder: Huss, Rainer, 72285 Pfalzgrafenweiler (DE)
(74) Vertreter: Suchy, Ulrich Johannes

(57) **Zusammenfassung**

Die Erfindung betrifft ein Setzwerkzeug (1), eine Montageanordnung und ein Verfahren zum Setzen eines Spreizankers (2). In einer ersten Montageposition des Setzwerkzeugs (1) ist es einem Benutzer möglich, den Spreizanker (2) mit einem Bohrhammer, der sich in einem drehenden und schlagenden Betriebszustand befindet, in ein Bohrloch (34) einzutreiben. Wird das Setzwerkzeug (1) danach in eine zweite Montageposition gebracht, kann der Spreizanker (2) mit dem Bohrhammer im schlagenden und drehenden Betrieb im Bohrloch verspreizt werden.

## Beschreibung

Die Erfindung betrifft ein Setzwerkzeug zum Setzen eines Spreizankers mit den Merkmalen des Oberbegriffs des Anspruchs 1, eine Montageanordnung eines solchen Setzwerkzeugs mit einem Spreizanker nach Anspruch 7 sowie ein Verfahren zum Setzen des Spreizankers in einem Bohrloch in einem Befestigungsgrund mit den Merkmalen des Oberbegriffs des Anspruchs 10.

Spreizanker dienen zu einer Verankerung, das heißt zu einer Befestigung in einem meist gebohrten und normalerweise zylindrischen Bohrloch in einem Befestigungsgrund aus beispielsweise Stein, Mauerwerk oder Beton.

Ein Spreizanker kann generell händisch im Befestigungsgrund befestigt werden. Hierzu muss meist der Spreizanker mittels eines Hammers unter relativ großem Kraftaufwand in das Bohrloch eingetrieben werden, bis eine gewünschte Setztiefe erreicht ist. Meist wird der Spreizanker derart weit in das Bohrloch eingetrieben, bis eine an dem Spreizanker angeordnete Mutter oder eine an der Mutter angeordnete Unterlegscheibe in Kontakt mit einem auf der Oberfläche des Befestigungsgrunds zu befestigenden Anbauteils tritt. Anschließend wird, meist mit einem Drehmomentschlüssel, die Mutter im Urzeigersinn gedreht, wodurch ein am Spreizanker angeordneter Spreizkörper in eine Spreizhülse gezogen wird, welche folglich gegen die Bohrlochwandung gedrückt und der Spreizanker somit endfest verankert wird. Hierbei spricht man auch von einer "Verspreizung" des Spreizankers. Generell ist es möglich, auf diese Art und Weise Spreizanker zu befestigen. Allerdings ist die Prozedur relativ zeit- und kraftaufwändig und bei einer größeren Anzahl zu verankernder Spreizanker nicht praktikabel. In der europäischen Patentschrift EP 2 265 413 B1 ist ein Werkzeug zum Verankern eines Spreizankers offenbart, mit welchem der Spreizanker mit Hilfe eines Bohrhammers sowohl in das Bohrloch eingetrieben als auch in einer Endposition verspreizt werden kann. Hierzu wird der Spreizanker in eine Aufnahme des Werkzeugs eingebracht und über die Mutter, die an einem Ankerbolzen angeordnet ist, klemmend gehalten. Mit dem Bohrhammer im "Schlagbetrieb" wird anschließend der Spreizanker schlagend in das Bohrloch eingetrieben. Nach dem Eintreiben wird der Bohrhammer auf "Drehbetrieb" umgestellt. Der Bohrhammer überträgt somit eine Drehung auf die Mutter, wodurch der Spreizanker im Befestigungsgrund verspreizt. Nachteilig an der bekannten Lösung ist, dass der Bohrhammer generell bei jedem zu befestigenden Spreizanker von "Schlagbetrieb" zum Eintreiben des Spreizankers auf "Drehbetrieb" zum Verspreizen des Spreizankers umgestellt werden muss. Dies ist zum einen mühsam und zum anderen sind Schalter an derartigen Bohrhämmern zumeist nicht für ein derartig häufiges Umschalten ausgelegt.

Aufgabe der Erfindung ist es, ein Setzwerkzeug vorzuschlagen, mit welchem ein Spreizanker mit Hilfe eines schlagenden und drehenden Werkzeugs, insbesondere eines Bohrhammers, der sich im "schlagenden und drehenden" Betrieb befindet, in ein Bohrloch eingetrieben und verspreizt werden kann, ohne den Betriebszustand des Bohrhammers zu wechseln.

Diese Aufgabe wird erfindungsgemäß durch die Merkmale des Anspruchs 1 gelöst. Die Erfindung betrifft ein Setzwerkzeug für Spreizanker. Unter "Spreizanker" sind insbesondere Bolzenanker und Hülsenanker zu verstehen. Das Grundprinzip hinter Bolzen- und Hülsenankern ist, dass ein Spreizkörper, insbesondere ein Spreizkonus, eine auf einem Bolzen oder Gewindebolzen angeordnete Spreizhülse aufspreizt. Bei einem Bolzenanker geschieht dies dadurch, dass der Bolzen und der Spreizkörper einstückig verbunden sind und der Bolzen mitsamt dem Spreizkörper relativ zur Spreizhülse verschoben wird, wohingegen bei einem Hülsenanker der Spreizkörper axial verschieblich bezüglich des Gewindebolzens ausgestaltet ist. Bei Hülsenankern kann zum Aufspreizen eine Mutter vorgesehen sein, die am Gewindebolzen axial verschieblich angeordnet ist. Jedoch sind auch Varianten bekannt, bei denen der Gewindebolzen als eine Gewindeschraube ausgestaltet ist, sprich die Mutter fest mit dem Gewindebolzen verbunden ist.

In der folgenden Beschreibung wird die Erfindung aus Übersichtsgründen am Beispiel eines Bolzenankers stellvertretend für Spreizanker erklärt, wobei die Erfindung, ohne den erfinderischen Gedanken zu verlassen, auf andere Spreizanker, insbesondere auf Hülsenanker, sofort übertragbar ist. Zudem wird stellvertretend für schlagende und drehende Werkzeuge im Folgenden der Bohrhammer zur Erklärung der Erfindung herangezogen, wobei die Erfindung nicht auf Bohrhämmer beschränkt ist.

Der zur Beschreibung der Erfindung verwendete Bolzenanker weist einen Metallbolzen mit einer Eintreibfläche an einem zweiten Ende, ein Gewindeelement mit einer Mutter, sowie eine Spreizhülse und einen Spreizkörper zum Aufspreizen der Spreizhülse an einem ersten Ende auf.

Das Setzwerkzeug erstreckt sich entlang einer Längsachse und ist insbesondere im Wesentlichen rotationssymmetrisch bezüglich dieser ausgestaltet. Das Setzwerkzeug weist einen ersten hülsenartigen Grundkörper auf. Dieser besteht insbesondere aus Metall und weist im Wesentlichen insbesondere die Gestalt einer Werkzeugnuss auf. Der erste Grundkörper erstreckt sich entlang der Längsachse und ist insbesondere drehsymmetrisch bezüglich dieser ausgestaltet. An einem ersten Ende weist der erste Grundkörper eine Haltevorrichtung mit Schlüsselflächen auf, die sich entlang der Längsachse erstrecken und insbesondere drehsymmetrisch bezüglich dieser sind. Generell sind unter den "Enden" des ersten Grundkörpers die Enden zu verstehen, zwischen denen sich der erste Grundkörper entlang der Längsachse erstreckt. Die Haltevorrichtung weist insbesondere sechs hexagonal orientierte Schlüsselflächen zur Aufnahme der Mutter des Bolzenankers, die insbesondere als Sechskantmutter ausgestaltet ist, auf. Möglich sind auch mehr oder weniger Schlüsselflächen. Generell muss die Ausgestaltung der Schlüsselflächen lediglich mit der Ausgestaltung der Mutter korrespondieren, derart, dass die Mutter in Richtung der Längsachse in die Haltevorrichtung eingebracht und dort formschlüssig gehalten werden kann, derart, dass die Mutter zur Haltevorrichtung bezüglich der Längsachse nicht verdreht werden kann, sprich, drehfest in der Haltevorrichtung drehfest gehalten wird. "Haltevorrichtung" meint insbesondere das Halten durch einen Formschluss, insbesondere spielpassungsartig. Die Haltevorrichtung kann jedoch Mittel enthalten, die die Mutter und somit den Bolzenanker gegen Herausfallen aus der Haltevorrichtung sichern. Beispielhaft hierfür sei eine mittels einer Feder federnd gelagerte Kugel erwähnt. Die Haltevorrichtung erstreckt sich beginnend von dem ersten Ende des ersten Grundkörpers mindestens derart weit in Richtung des zweiten Endes des ersten Grundkörpers, dass die Mutter auf mindestens einem Teil ihrer axialen Höhe, insbesondere vollständig in Längsrichtung von den Schlüsselflächen, in der Haltevorrichtung umfasst werden kann. Die Haltevorrichtung kann sich jedoch noch weiter in Richtung des zweiten Endes erstrecken. Am zweiten Ende des ersten Grundkörpers ist eine Aufnahmevorrichtung angeordnet. Diese ist als mehrkantiger, insbesondere vierkantiger, Durchgang im ersten Grundkörper ausgestaltet, der sich beginnend vom zweiten Ende des ersten Grundkörpers in Richtung der Halteflächen erstreckt. Die Aufnahmevorrichtung ist insbesondere rotationssymmetrisch zu der Längsachse und erstreckt sich entlang dieser.

Das Setzwerkzeug umfasst weiter einen zweiten stößelartigen Grundkörper mit einer an einem ersten Ende angeordneten Schlagfläche und einem sich vom ersten Ende in Richtung des zweiten Endes erstreckenden Verbindungsabschnitt, der in die Aufnahmevorrichtung einführbar ist. Generell sind unter "Enden" des zweiten Grundkörpers die Enden zu verstehen, zwischen denen sich der zweite Grundkörper entlang der Längsachse erstreckt. Insbesondere ist der zweite Grundkörper rotationssymmetrisch bezüglich der Längsachse ausgestaltet. Die am ersten Ende angeordnete Schlagfläche kann als eine in einer Radialebene zur Längsachse liegende, plane Fläche ausgestaltet sein. Die Schlagfläche dient dazu, Schlagenergie, die von dem Bohrhammer erzeugt wird, auf die Eintreibfläche des Bolzenanker zu übertragen, um diesen in das Bohrloch einzutreiben. Die Ausgestaltung des Verbindungsabschnitts korrespondiert derart mit der Aufnahmevorrichtung im ersten Grundkörper, dass der Verbindungsabschnitt formschlüssig und spielpassungsartig in das zweite Ende des ersten Grundkörpers einführbar ist. An einem zweiten Ende weist der zweite Grundkörper ein Anschlusselement auf, um das Setzwerkzeug mit dem Bohrhammer verbinden zu können. Insbesondere handelt es sich hierbei um einen "SDS" oder "SDS-Plus" Anschluss. Auch andere Anschlusselemente sind möglich. Allgemein muss das Anschlusselement lediglich derart ausgebildet sein, dass es klemmend, also axialfest und drehfest, in einem Spannfutter des Bohrhammers gehalten werden kann.

Der zweite Grundkörper ist mit dem Verbindungsabschnitt in der Aufnahmevorrichtung des ersten Grundkörpers bezüglich der Längsachse, also in Längsrichtung, axial verschieblich geführt und bezüglich des ersten Grundkörpers drehfest gehalten. Somit kann eine Drehenergie oder anders gesprochen eine Drehbewegung des Bohrhammers von dem zweiten Grundkörper auf den ersten Grundkörper übertragen werden.

Kennzeichnend für die Erfindung ist, dass das Setzwerkzeug in eine erste Montageposition bringbar ist, in welcher der erste und der zweite Grundkörper axialfest zueinander festlegbar sind, sprich der erste und der zweite Grundkörper zueinander unverschieblich sind. Erfindungsgemäß steht in der ersten Montageposition die Schlagfläche des zweiten Grundkörpers axial über das erste Ende des ersten Grundkörpers über, schließt bündig mit dem Ende des ersten Grundkörpers ab oder befindet sich innerhalb der Schlüsselflächen. Hierdurch ist in einer erfindungsgemäßen Montageanordnung des im Bohrloch zu verankernden Bolzenankers mit dem Setzwerkzeug gewährleistet, dass die Schlagfläche des zweiten Grundkörpers in Kontakt mit der Eintreibfläche des Bolzenankers zur Übertragung von Schlagenergie des Bohrhammers auf den Bolzenanker tritt und die Mutter derart bezüglich des ersten und des zweiten Grundkörpers angeordnet ist, dass die Mutter außer Wirkverbindung zu den Schlüsselflächen der Haltevorrichtung steht. Somit kann der Bolzenanker lediglich die durch den Bohrhammer erzeugte Schlagenergie aufnehmen, selbst wenn sich der Bohrhammer in einem schlagenden und drehenden Betriebszustand befindet. Die Drehenergie, sprich die Drehbewegung des Bohrhammers, kann nur über die Mutter auf den Metallbolzen übertragen werden. Durch die erfindungsgemäße Anordnung der Schlagfläche in der ersten Montageposition ist die Haltevorrichtung in der ersten Montageposition jedoch nicht mit der Mutter in Eingriff, wodurch folglich die Mutter nicht durch die Haltevorrichtung gedreht werden kann. Selbst wenn sich die Schlagfläche nur innerhalb der Schlüsselflächen befindet, ist eine Drehenergieübertragung nicht möglich, da die Mutter in einem einsatzbereiten Zustand des Bolzenankers derart weit in Richtung des ersten Endes des Bolzenankers gedreht ist, dass zwischen der Eintreibfläche und der Mutter ein Abstand entsteht und die Mutter somit nicht bündig mit der Eintreibfläche abschließt. Dieser Überstand sorgt dafür, dass, wenn die Schlagfläche in Kontakt mit der Eintreibfläche ist, die Mutter auch dann außer Eingriff zu der Haltevorrichtung, respektive den Schlüsselflächen steht, wenn sich die Schlagfläche innerhalb der Schlüsselflächen befindet.

Durch die erste Montageposition muss ein Benutzer des Setzwerkzeugs folglich nicht mehr darauf achten, ob sich der Bohrhammer in einem schlagenden oder einem schlagenden und drehenden Betriebszustand befindet. Die Festlegung oder Fixierung des ersten und des zweiten Grundkörpers zueinander zur Festlegung oder Fixierung der ersten Montageposition dient dazu, dass die erste Montageposition selbst dann stabil bleibt, wenn auf das Setzwerkzeug Dreh- und Schlagenergien des Bohrhammers einwirken. Eine derartige Festlegung kann beispielsweise dadurch realisiert sein, dass der erste und der zweite Grundkörper zueinander verklemmt, verrastet oder auf ähnliche Art und Weise zueinander axialfest festgelegt werden. "Axialfest" bedeutet also nicht absolut unverschieblich, sondern im Gebrauch fest aber durch den Anwender verschiebbar, zum Beispiel in die nachfolgend beschriebene zweite Montageposition.

In einer weiteren vorteilhaften Ausgestaltung der Erfindung ist das Setzwerkzeug in eine zweite Montageposition bringbar, in welcher die Schlagfläche in Längsrichtung zwischen den Schlüsselflächen und dem zweiten Ende des ersten Grundkörpers angeordnet ist. In dieser Position kann die Haltevorrichtung mit der Mutter in Kontakt treten, so dass in einer weiteren erfindungsgemäßen Montageanordnung die Mutter formschlüssig zwischen den Schlüsselflächen der Haltevorrichtung des ersten Grundkörpers angeordnet ist, so dass eine Drehung des ersten und des zweiten Grundkörpers um die Längsachse eine Drehung der Mutter bewirkt. Die Mutter kann folglich die Drehenergie des Bohrhammers aufnehmen. Hierdurch ist es möglich, den Bolzenanker, nachdem dieser in das Bohrloch eingebracht ist, dort zu verspreizen, indem durch die Drehung der Mutter das Spreizelement in die Spreizhülse gezogen wird und folglich im Bohrloch aufspreizt und somit den Bolzenanker verankert.

Insbesondere sind in der zweiten Montageposition der erste und der zweite Grundkörper ebenfalls axialfest zueinander festgelegt. Dies stellt eine deutliche Erleichterung bei der Verwendung des Setzwerkzeugs beispielsweise bei einer "Über-Kopf-Montage" des Bolzenankers dar. Hierbei bestünde die Gefahr, dass ohne eine axiale Festlegung der erste Grundkörper aufgrund der Schwerkraft von der Mutter herunterrutschen könnte, insbesondere dann, wenn die Haltevorrichtung keine Klemmeinrichtung zum Halten der Mutter aufweist.

In einer weiteren erfindungsgemäßen Montageanordnung können der Bolzenanker und das Setzwerkzeug mit dem Bohrhammer eine Vormontageposition einnehmen. In dieser Vormontageposition ist der Bolzenanker am Setzwerkzeug über die Mutter in der Haltevorrichtung des ersten Grundkörpers formschlüssig durch die Schlüsselflächen und insbesondere klemmend durch eine Klemmeinrichtung gehalten. In der Vormontageposition sind der Bohrhammer mit dem Setzwerkzeug und der Bolzenanker mit dem Setzwerkzeug verbunden. Somit kann ein Benutzer mit beiden Händen den Bohrhammer führen und den Bolzenanker an einer Bohrlochmündung an einem Bohrloch, in welches der Bolzenanker einzubringen ist, ansetzen. Durch die Klemmung ist es zudem möglich, dass bei einer Befestigung im Boden der Anker aufgrund der Schwerkraft nicht aus der Haltevorrichtung fallen kann.

In einer weiteren vorteilhaften Ausgestaltung des erfindungsgemäßen Setzwerkzeugs umfasst das Setzwerkzeug eine Rastmechanik, derart, dass in der ersten und/oder in der zweiten Montageposition der erste und der zweite Grundkörper in Längsrichtung axialfest zueinander festlegbar sind. Eine Rastmechanik sichert einen stabilen Zustand des ersten und/oder des zweiten Montagezustands und ermöglicht es dem Benutzer des Setzwerkzeugs relativ einfach zwischen der ersten und der zweiten Montageposition zu wechseln. Die Rastmechanik kann hierbei ein elastisches Rastelement umfassen, welches mit der Aufnahmevorrichtung, insbesondere mit einer Mulde oder einer Schulter in der Aufnahmevorrichtung, rastend in Wirkverbindung tritt. Als elastisches Rastelement kann beispielsweise eine federbeaufschlagte Kugel oder ein Zapfen dienen. Das Rastelement ist insbesondere am zweiten Grundkörper angeordnet und in Richtung des ersten Grundkörpers kraftbeaufschlagt. Jedoch kann das Rastelement auch am ersten Grundkörper angeordnet und in Richtung des zweiten Grundkörpers kraftbeaufschlagt sein. Die Rastmechanik ist derart ausgestaltet, dass ein Benutzer bei einem Wechsel der Montagepositionen lediglich eine gewisse Kraft insbesondere entlang der Längsachse zwischen dem ersten und dem zweiten Grundkörper aufbringen muss, um die Rastmechanik zu lösen. Insbesondere "schnappt" die Rastmechanik ein, wenn der Benutzter die erste und/oder die zweite Montageposition erreicht hat. Durch die Rastmechanik wird erreicht, dass während auf das Setzwerkzeug Dreh- und Schlagenergien einwirken, das Setzwerkzeug trotzdem jederzeit stabil in der ersten und/oder der zweiten Montageposition verbleibt.

In einer weiteren vorteilhaften Ausgestaltung der Erfindung ist zwischen dem ersten und dem zweiten Ende des zweiten Grundkörpers ein, insbesondere den Verbindungsabschnitt begrenzender, bundartiger Anschlag angeordnet, der eine maximale axiale Verschieblichkeit des ersten und des zweiten Grundkörpers zueinander begrenzt. Hierdurch wird zum einen vermieden, dass der erste Grundkörper derart weit in Richtung des zweiten Endes des zweiten Grundkörpers gleiten und somit in Kontakt mit dem Bohrhammer treten kann. Zum anderen kann der Anschlag dazu dienen, die erste Montagestellung zu definieren. Anders gesprochen kann der Anschlag derart auf dem zweiten Grundkörper angeordnet sein, dass, wenn das zweite Ende des ersten Grundköpers in Kontakt mit der Schulter tritt, das Setzwerkzeug die erste Montageposition einnimmt und insbesondere in dieser Position verrastet. Diese Ausgestaltung kann es dem Benutzer ermöglichen, zum Erreichen der ersten Montageposition den zweiten Grundkörper lediglich "auf Anschlag" gegen die Schulter ziehen zu müssen.

In einer weiteren vorteilhaften Ausgestaltung der Erfindung ist die Schlagfläche des zweiten Grundkörpers als eine sich in Richtung des zweiten Endes erstreckende Vertiefung ausgestaltet. Die Vertiefung kann kegelig, napfförmig, halbrund oder dergleichen ausgeführt sein. Durch die spezielle Ausgestaltung der Schlagfläche ist es möglich, die Eintreibfläche des Bolzenankers zu umfassen, derart, dass der zweite Grundkörper bei der Übertragung der Schlagenergie von der Schlagfläche auf die Eintreibfläche, nicht von der Eintreibfläche "herunterspringen" oder seitlich, also radial zur Längsachse ausweichen kann.

In einem erfindungsgemäßen Verfahren zum Setzen des bereits beschriebenen Bolzenankers in dem Bohrloch in dem Befestigungsgrund mit dem erfindungsgemäßen Setzwerkzeug, wird das Setzwerkzeug in die erste Montageposition gebracht und in der ersten Montageposition solange Dreh- und Schlagenergie von dem Bohrhammer, der sich in einem drehenden und schlagenden Betriebszustand befindet, auf den in ein Bohrloch teilweise voreingebrachten Bolzenanker übertragen. Dabei wird die Dreh- und Schlagenergie auf den zweiten Grundkörper und von der Schlagfläche des zweiten Grundkörpers auf die Eintreibfläche übertragen, wobei im Wesentlichen nur die Schlagenergie übertragen wird, bis der Bolzenanker eine gewünschte Setztiefe erreicht hat. Dieser Montageschritt kann als "Eintreibvorgang" bezeichnet werden. Die Drehenergie kann hierbei nicht auf das Setzwerkzeug übertragen werden, da in der ersten Montageposition die Mutter nicht in Eingriff mit der Haltevorrichtung steht und somit das Setzwerkzeug "frei" auf der Eintreibfläche dreht, wohingegen die Schlagenergie dazu führt, dass der Bolzenanker in axialer Richtung zur Längsachse in den Befestigungsgrund eingetrieben wird. Die gewünschte Setztiefe ist zumeist dann erreicht, wenn die Mutter des Bolzenankers oder eine an der Mutter angeordnete Unterlegscheibe in Kontakt mit einer Oberfläche des Befestigungsgrunds tritt.

Zusätzlich kann zu einer Erleichterung der Vorpositionierung des zu setzenden Bolzenankers im Bohrloch in einem weiteren erfindungsgemäßen Verfahrensschritt vor dem Einstellen der ersten Montageposition in einem Vormontageschritt, vor dem eigentlichen, oben beschriebenen Eintreibvorgang, das Setzwerkzeug über das Anschlusselement mit dem Bohrhammer verbunden werden. Weiter kann das zweite Ende des Metallbolzens und die daran angeordnete Mutter derart weit in die Haltevorrichtung des ersten Grundkörpers eingesteckt werden, dass der Bolzenanker durch die Mutter in der Haltevorrichtung zwischen den Schlüsselflächen formschlüssig und insbesondere klemmend gehalten wird. Insbesondere befindet sich das Setzwerkzeug hierbei in der zweiten Montageposition. Anschließend kann der Bolzenanker mit dem Spreizkörper und der Spreizhülse in das Bohrloch voreingebracht werden. Unter "voreingebracht" ist das Ansetzen beziehungsweise das teilweise Einbringen des ersten Endes des Bolzenankers in die Bohrungsmündung gemeint, sodass zumindest Teile des Spreizkörpers sich im Bohrloch befinden. Der Bolzenanker kann auch von Hand voreingebracht werden.

In einem weiteren erfindungsgemäßen Verfahrensschritt wird das Setzwerkzeug, nach dem Eintreiben des Bolzenankers in den Befestigungsgrund, anschließend in die zweite Montageposition gebracht und in der zweiten Montageposition Drehenergie von dem Bohrhammer, der sich weiterhin in dem drehenden und schlagenden Betriebszustand befindet, über die Schlüsselflächen der Haltevorrichtung auf die Mutter übertragen. Hierbei bewirkt im Wesentlichen nur die Drehenergie eine Bewegung des Bolzenankers, da der Bolzenanker zumeist derart weit in den Befestigungsgrund eingebracht ist, dass die Mutter oder eine an der Mutter angeordnete Unterlegscheibe in Kontakt zu der Oberfläche steht und folglich keine weitere axiale Bewegung des Setzwerkzeugs möglich ist, da die Schlagenergie über die Unterlegscheibe in den Befestigungsgrund abgeleitet, sprich die Schlagenergie von dem Befestigungsgrund kompensiert wird. Durch die Übertragung der Drehenergie spreizt der Spreizkörper des Bolzenankers die Spreizhülse im Bohrloch auf und der Bolzenanker wird endfest verankert.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels erklärt. Es zeigen:
- Figur 1: ein erfindungsgemäßes Setzwerkzeug mit einem Bolzenanker in einer ersten Montageposition; und
- Figur 2: das erfindungsgemäße Setzwerkzeug mit dem Bolzenanker aus Figur 1 in einer zweiten Montageposition.

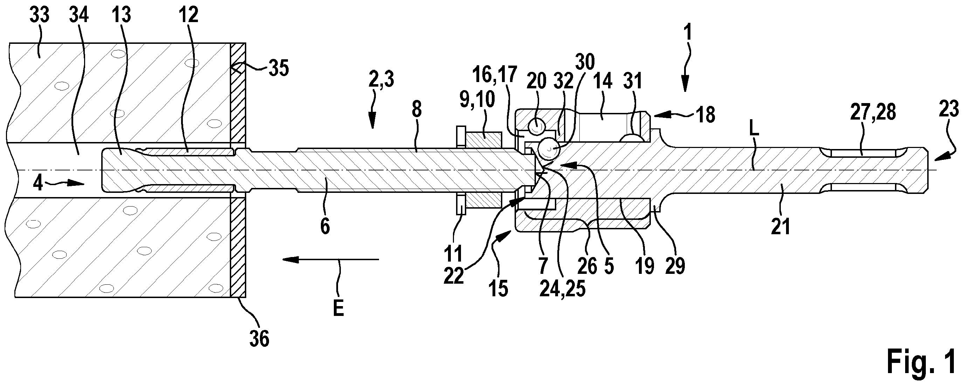

Figur 1 zeigt ein Setzwerkzeug 1 zum Verankern eines Spreizankers 2 in einer ersten Montageposition. Das Setzwerkzeug 1 und der Spreizanker 2 bilden eine Montageanordnung. Der Spreizanker 2 ist als ein Bolzenanker 3 ausgestaltet. Der Bolzenanker 3 erstreckt sich zwischen einem ersten Ende 4 und einem zweiten Ende 5 entlang einer Längsachse L. Der Bolzenanker 3 umfasst einen Metallbolzen 6 und eine am zweiten Ende 5 angeordnete Eintreibfläche 7. Von dem zweiten Ende 5 erstreckt sich ein Gewindeelement 8 in Richtung des ersten Endes 4. Das Gewindeelement 8 dient zur Aufnahme eines Drehmomentangriffsmittels 9 in Form einer Mutter 10. An der Mutter 10 ist eine Unterlegscheibe 11 angeordnet. Am ersten Ende 4 des Bolzenankers 3 ist ein Spreizkörper 13 zum Aufspreizen einer Spreizhülse 12 angeordnet. Das erfindungsgemäße Setzwerkzeug 1 weist einen ersten hülsenartigen Grundkörper 14 auf, der bezüglich der Längsachse L im Wesentlichen rotationssymmetrisch ausgestaltet ist. An einem ersten Ende 15 des ersten Grundkörpers 14 ist eine Haltevorrichtung 16 mit Schlüsselflächen 17 angeordnet. Die Schlüsselflächen 17 sind hexagonal ausgestaltet und bezüglich der Längsachse L drehsymmetrisch. Die Schlüsselflächen 17 bilden hier einen Innensechskant, der mit einem Außensechskant der Mutter 10 korrespondiert. Die Haltevorrichtung 16 dient mit den Schlüsselflächen 17 zur formschlüssigen Aufnahme der Mutter 10. Durch eine Klemmeinrichtung 20 ist die Mutter 10 zudem klemmend in der Haltevorrichtung 16 gehalten. Über die Haltevorrichtung 16 und den Schlüsselflächen 17 ist der Bolzenanker 3 an dem Setzwerkzeug 1 gehalten. An einem zweiten Ende 18 des ersten Grundkörpers 14 ist eine vierkantige Aufnahmevorrichtung 19 angeordnet. Diese erstreckt sich vom zweiten Ende 18 in Richtung des ersten Endes 15 bis zu der Haltevorrichtung 16. Die Aufnahmevorrichtung 19 ist bezüglich der Längsachse L drehsymmetrisch ausgestaltet.

Das erfindungsgemäße Setzwerkzeug 1 umfasst weiter einen zweiten stößelartigen Grundkörper 21 der sich zwischen einem ersten Ende 22 und einem zweiten Ende 23 entlang der Längsachse L erstreckt und bezüglich dieser im Wesentlichen drehsymmetrisch ausgestaltet ist. Am ersten Ende 22 ist eine Schlagfläche 24 angeordnet, die dazu dient, Schlagenergie eines Bohrhammers (nicht dargestellt) auf die Eintreibfläche 7 des Bolzenankers 3 zu übertragen. Die Schlagfläche 24 ist als eine sich in Richtung des zweiten Endes 23 erstreckende Vertiefung 25 ausgestaltet, wodurch die Schlagfläche 24 eine napfartige Form aufweist. Durch die spezielle Form der Schlagfläche 24 umgibt diese die Eintreibfläche 7, respektive das zweite Ende 5 des Bolzenankers 3. Hierdurch ist die Eintreibfläche 7 in der Schlagfläche 24 gehalten, wodurch die Schlagfläche 24 nicht von der Eintreibfläche 7 "herunterspringen" kann, wenn Schlagenergie von der Schlagfläche 24 auf die Eintreibfläche 7 aufgebracht wird. Ein Verbindungsabschnitt 26 erstreckt sich vom ersten Ende 22 des zweiten Grundkörpers 21 in Richtung des zweiten Endes 23. Der Verbindungsabschnitt 26 ist vierkantig ausgestaltet und in die Aufnahmevorrichtung 19 des ersten Grundkörpers 14 spielpassungsartig und formschlüssig einführbar. Durch die Aufnahmevorrichtung 19 ist der Verbindungsabschnitt 26 und somit der zweite Grundkörper 21 bezüglich des ersten Grundkörpers 14 entlang der Längsachse L axial verschieblich geführt und der erste und der zweite Grundkörper 14, 21 zueinander drehfest gehalten. Ein als "SDS-Adapter" 28 ausgestaltetes Anschlusselement 27 ist dazu vorgesehen, in einen Bohrhammer (nicht dargestellt) eingebracht zu werden, wodurch das Setzwerkzeug 1 an dem Bohrhammer gehalten ist. Am zweiten Grundkörper 21 ist ein bezüglich der Längsachse L drehsymmetrischer bundartiger Anschlag 29 angeordnet, der eine maximale Verschieblichkeit des ersten Endes 22 des zweiten Grundkörpers 21 in Richtung des ersten Endes 15 des ersten Grundkörpers 14 begrenzt. Die Verschieblichkeit ist beendet, wenn der bundartige Anschlag 29 in Kontakt zu dem zweiten Ende 18 des ersten Grundkörpers 14 tritt. Ein elastisches Rastelement 30 in Form einer federbeaufschlagten Kugel ist im Verbindungsabschnitt 26 am ersten Ende 22 des zweiten Grundkörpers 21 angeordnet und kann entweder mit einer am ersten Grundkörper 14 angeordneten Schulter 32 oder mit einer am ersten Grundkörper 14 angeordneten Mulde 31 rastend in Wirkverbindung treten.

In Figur 1 ist die erste Montageposition des Setzwerkzeugs 1 dargestellt. In der ersten Montageposition ist der bundartige Anschlag 29 in Kontakt mit dem zweiten Ende 18 des ersten Grundkörpers 14 und das elastische Rastelement 30 hintergreift die Schulter 32, wodurch der erste Grundkörper 14 und der zweite Grundkörper 21 bezüglich der Längsachse L axialfest zueinander festgelegt sind. In der ersten Montageposition befindet sich die Schlagfläche 24 innerhalb der Schlüsselflächen 17, wodurch die Mutter 10 des Bolzenankers 3 nicht in die Haltevorrichtung 16 eingebracht werden kann. Um den Bolzenanker 3 in einem Bohrloch 34 in einem Befestigungsgrund 33 zu verankern, kann der Benutzer des Setzwerkzeugs 1, das mit dem Bohrhammer verbunden ist (nicht dargestellt), den Bohrhammer in einem schlagenden und drehenden Betriebszustand betreiben, wodurch der Bohrhammer Schlagenergie und Drehenergie erzeugt. Jedoch wird nur die Schlagenergie auf den Bolzenanker 3 übertragen, der sich folglich in Einbringrichtung E in das Bohrloch 34 des Befestigungsgrunds 33 bewegt. Die Drehenergie des Bohrhammers kann nur über die Mutter 10 übertragen werden. In der ersten Montageposition dreht das Setzwerkzeug 1, genauer gesagt die Schlagfläche 24 des zweiten Grundkörpers 21, "leer" auf der Eintreibfläche 7 des Bolzenankers 3.

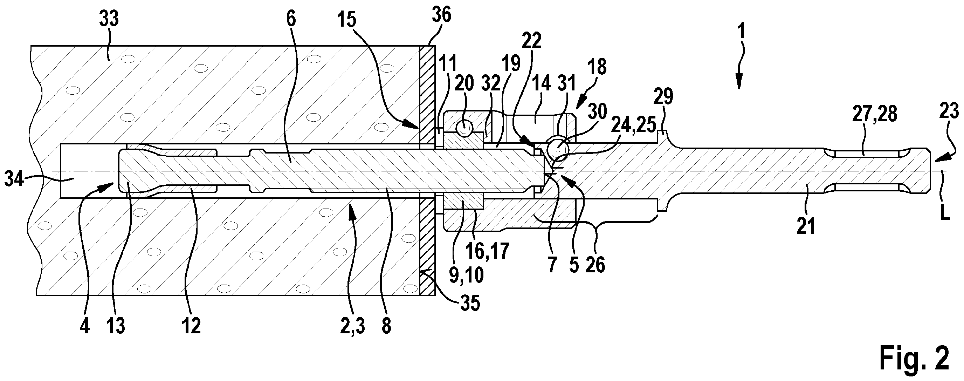

Figur 2 zeigt die zweite Montageposition des Setzwerkzeugs 1. In der gewünschten Setztiefe des Bolzenankers 3 tritt die Unterlegscheibe 11 der Mutter 10 in Anlage mit einer Oberfläche 35 eines Anbauteils 36, das mit dem Bolzenanker 3 am Befestigungsgrund 33 befestigt wird. Jetzt kann die Haltevorrichtung 16 des ersten Grundkörpers 14 auf die Mutter 10 aufgeschoben werden. Die Schlüsselflächen 17 umfassen die Mutter 10 hierbei formschlüssig. In der zweiten Montageposition ist, wie in Figur 2 dargestellt, das elastische Rastelement 30 in Wirkverbindung mit der Vertiefung 31, wodurch der erste Grundkörper 14 und der zweite Grundkörper 21 bezüglich der Längsachse L axialfest zueinander in der zweiten Montageposition festgelegt sind. Wird in der zweiten Montageposition Schlag- und Drehenergie des Bohrhammers auf den Bolzenanker 3 übertragen, "wirkt" im Wesentlichen nur die Drehenergie, welche dazu führt, dass die Mutter 10 bezüglich des Gewindeelements 8 derart gedreht wird, dass der Spreizkörper 13 in die Spreizhülse 12 gezogen wird, wodurch der Bolzenanker 3 im Bohrloch 34 im Befestigungsgrund 33 verspreizt wird. Abschließend kann das Setzwerkzeug 1 vom Bolzenanker 3 entfernt werden. Ein Benutzer des Setzwerkzeugs 1 kann also während der kompletten Montage des Bolzenankers 3 im Befestigungsgrund 33 den Bohrhammer im drehenden und schlagenden Betriebszustand betreiben, ohne die Zustände von "rein schlagend" durch das Umlegen eines Schalters am Bohrhammer auf "rein drehend" wechseln zu müssen.

Die in Figur 2 dargestellte Anordnung des Bolzenankers 3 an dem Setzwerkzeug 1 kann auch als Vormontageposition angesehen werden. In der Vormontageposition ist der Bolzenanker 3 klemmend am Setzwerkzeug 1 gehalten, welches mit dem Bohrhammer verbunden ist. Somit ist es möglich, den Bohrhammer mit beiden Händen zu führen, ohne den Bolzenanker 3 zusätzlich halten zu müssen. Der Bolzenanker 3 kann in der Vormontageposition mit dem Spreizkörper 13 voran in das Bohrloch 34 "voreingebracht" werden, wodurch der Bolzenanker 3 im Bohrloch 34 vorfixiert wird. Anschließend muss das Setzwerkzeug 1 lediglich in die erste Montageposition, wie sie in Figur 1 dargestellt ist, gebracht werden. Anschließend kann der Setzvorgang des Bolzenankers 3 in den Befestigungsgrund 33 beginnen.

### Bezugszeichenliste

- 1: Setzwerkzeug
- 2: Spreizanker
- 3: Bolzenanker
- 4: erstes Ende des Bolzenankers 3
- 5: zweites Ende des Bolzenankers 3
- 6: Metallbolzen
- 7: Eintreibfläche
- 8: Gewindeelement
- 9: Drehmomentangriffsmittel
- 10: Mutter
- 11: Unterlegscheibe
- 12: Spreizhülse
- 13: Spreizkörper
- 14: erster hülsenartiger Grundkörper
- 15: erstes Ende des ersten Grundkörpers 14
- 16: Haltevorrichtung
- 17: Schlüsselfläche
- 18: zweites Ende des ersten Grundkörpers 14
- 19: Aufnahmevorrichtung
- 20: Klemmeinrichtung
- 21: zweiter stößelartiger Grundkörper
- 22: erstes Ende des zweiten Grundkörpers 21
- 23: zweites Ende des zweiten Grundkörpers 21
- 24: Schlagfläche
- 25: Vertiefung
- 26: Verbindungsabschnitt
- 27: Anschlusselement
- 28: SDS-Adapter
- 29: bundartiger Anschlag
- 30: elastisches Rastelement
- 31: Mulde
- 32: Schulter
- 33: Befestigungsgrund
- 34: Bohrloch
- 35: Oberfläche des Anbauteils 36
- 36: Anbauteil
- L: Längsachse
- E: Einbringrichtung

## Patentansprüche

1. Setzwerkzeug (1) für Spreizanker (2), insbesondere Bolzenanker (3), wobei sich das Setzwerkzeug (1) entlang einer Längsachse (L) erstreckt, aufweisend
- einen ersten hülsenartigen Grundkörper (14) mit einer an einem ersten Ende (15) angeordneten Haltevorrichtung (16) mit Schlüsselflächen (17) die sich entlang der Längsachse (L) erstrecken, zum Halten einer Mutter (10) oder eines Schraubenkopfs eines Spreizankers (2) und mit einer an einem zweiten Ende (18) angeordneten Aufnahmevorrichtung (19),
- einen zweiten stößelartigen Grundkörper (21) mit einer an einem ersten Ende (22) angeordneten Schlagfläche (24) und einem sich vom ersten Ende (22) in Richtung eines zweiten Endes (23) erstreckenden Verbindungsabschnitt (26), der in die Aufnahmevorrichtung (19) einführbar ist, und einem am zweiten Ende (23) angeordneten Anschlusselement (27) zum Verbinden mit einem schlagenden und drehenden Werkzeug, insbesondere einem Bohrhammer,
- wobei der zweite Grundkörper (21) mit dem Verbindungsabschnitt (26) in der Aufnahmevorrichtung (19) des ersten Grundkörpers (14) bezüglich der Längsachse (L) axial verschieblich geführt und bezüglich des ersten Grundkörpers (14) drehfest gehalten ist,
**dadurch gekennzeichnet, dass** das Setzwerkzeug (1) in eine erste Montageposition bringbar ist, in welcher der erste und der zweite Grundkörper (14, 21) axialfest zueinander festlegbar sind, wobei in der ersten Montageposition die Schlagfläche (24) des zweiten Grundkörpers (21) axial über das erste Ende (15) des ersten Grundkörpers (14) übersteht, bündig mit dem ersten Ende (15) des ersten Grundkörpers (14) abschließt oder sich innerhalb der Schlüsselflächen (17) befindet.

2. Setzwerkzeug (1) nach Anspruch 1, **dadurch gekennzeichnet, dass** das Setzwerkzeug (1) eine zweite Montageposition bringbar ist, in welcher die Schlagfläche (24) in Längsrichtung zwischen den Schlüsselflächen (17) und dem zweiten Ende (18) des ersten Grundkörpers (14) angeordnet ist.

3. Setzwerkzeug (1) nach Anspruch 1 oder 2, **dadurch gekennzeichnet, dass** das Setzwerkzeug (1) eine Rastmechanik umfasst, derart, dass in der ersten und/oder in der zweiten Montageposition der erste und der zweite Grundkörper (14, 21) in Längsrichtung axialfest zueinander festgelegt sind.

4. Setzwerkzeug (1) nach Anspruch 3, **dadurch gekennzeichnet, dass** die Rastmechanik ein elastisches Rastelement (30) umfasst, welches mit der Aufnahmevorrichtung (19), insbesondere mit einer Mulde (31) und/oder einer Schulter (32) der Aufnahmevorrichtung (19), rastend in Wirkverbindung bringbar ist.

5. Setzwerkzeug (1) nach einem der Ansprüche 1 bis 4, **dadurch gekennzeichnet, dass** zwischen dem ersten und dem zweiten Ende (22, 23) des zweiten Grundkörpers (21) ein, insbesondere den Verbindungsabschnitt (26) begrenzender, bundartiger Anschlag (29) angeordnet ist, der eine maximale axiale Verschieblichkeit des ersten und des zweiten Grundkörpers (14, 21) zueinander begrenzt.

6. Setzwerkzeug (1) nach einem der Ansprüche 1 bis 5, **dadurch gekennzeichnet, dass** die Schlagfläche (24) des zweiten Grundkörpers (21) als eine sich in Richtung des zweiten Endes (23) erstreckende Vertiefung (25) ausgestaltet ist.

7. Montageanordnung eines Spreizankers (2), insbesondere eines Bolzenankers (3) mit einem Setzwerkzeug (1) nach einem der vorhergehenden Ansprüche, wobei der Spreizanker (2) einen Metallbolzen (6) mit einer Eintreibfläche (7) an einem zweiten Ende (5), ein Gewindeelement (8) mit einem Drehmomentangriffsmittel (9), insbesondere einer Mutter (10) oder Schraube, sowie eine Spreizhülse (12) und einen Spreizkörper (13) zum Aufspreizen der Spreizhülse (12) an einem ersten Ende (4) umfasst, wobei in der ersten Montageposition die Schlagfläche (24) des zweiten Grundkörpers (21) in Kontakt mit der Eintreibfläche (7) zur Übertragung von Schlagenergie des schlagenden und drehenden Werkzeugs auf den Spreizanker (2) tritt und das Drehmomentangriffsmittel (9), insbesondere die Mutter (10), derart bezüglich des ersten und des zweiten Grundkörpers (14, 21) angeordnet ist, dass die Mutter (10) außer Wirkverbindung zu den Schlüsselflächen (17) der Haltevorrichtung (16) steht.

8. Montageanordnung nach Anspruch 7, **dadurch gekennzeichnet, dass** in einer Vormontageposition der Spreizanker (2) am Setzwerkzeug (1) über das Drehmomentangriffsmittel (9) gehalten ist, insbesondere mittels der Mutter (10) in der Haltevorrichtung (16) des ersten Grundkörpers (14) formschlüssig durch die Schlüsselflächen (17) und insbesondere klemmend.

9. Montageanordnung nach Anspruch 7 oder 8, **dadurch gekennzeichnet, dass** in der zweiten Montageposition das Drehmomentangriffsmittel (9), insbesondere die Mutter (10), formschlüssig zwischen den Schlüsselflächen (17) der Haltevorrichtung (16) des ersten Grundkörpers (14) angeordnet ist, so dass eine Drehung des ersten und des zweiten Grundkörpers (14, 21) um die Längsachse (L) eine Drehung des Drehmomentangriffsmittels (9), insbesondere der Mutter (10), bewirkt.

10. Verfahren zum Setzen eines Spreizankers (2) in einem Bohrloch (34) in einem Befestigungsgrund (33), wobei der Spreizanker (2) einen Metallbolzen (6) mit einer Eintreibfläche (7) an einem zweiten Ende (5), ein Gewindeelement (8) mit einem Drehmomentangriffsmittel (9), insbesondere einer Mutter (10) oder Schraube, sowie eine Spreizhülse (12) und einen Spreizkörper (13) zum Aufspreizen der Spreizhülse (12) an einem ersten Ende (4) umfasst, mit einem Setzwerkzeug (1) nach einem der Ansprüche 1 bis 6, **dadurch gekennzeichnet, dass** das Setzwerkzeug (1) in die erste Montageposition gebracht wird und in der ersten Montageposition solange Dreh- und Schlagenergie von dem Werkzeug, das sich in einem drehenden und schlagenden Betriebszustand befindet, auf den zweiten Grundkörper (21) übertragen wird, insbesondere bis das Drehmomentangriffsmittel (9), insbesondere die Mutter (10), in Anlage zu einer Oberfläche (35) des Befestigungsgrunds (33) tritt.

11. Verfahren nach Anspruch 10, **dadurch gekennzeichnet, dass** vor dem Einstellen der ersten Montageposition in einem Vormontageschritt das Setzwerkzeug (1) über das Anschlusselement (27) mit einem schlagenden und drehenden Werkzeug, insbesondere einem Bohrhammer, verbunden wird und dass das erste Ende (4) des Metallbolzens (6) derart in die Haltevorrichtung (16) des ersten Grundkörpers (14) eingesteckt wird, dass der Spreizanker (2) durch das Drehmomentangriffsmittel (9) in der Haltevorrichtung (16) zwischen den Schlüsselflächen (17) formschlüssig und insbesondere klemmend gehalten wird und anschließend der Spreizanker (2) zumindest mit Teilen des Spreizkörpers (13) in das Bohrloch (34) voreingebracht wird.

12. Verfahren nach Anspruch 10 oder 11, **dadurch gekennzeichnet, dass** das Setzwerkzeug (1) nach dem Vormontageschritt in die zweite Montageposition gebracht wird und in der zweiten Montageposition Drehenergie von dem Werkzeug, das sich in einem drehenden und schlagenden Betriebszustand befindet, über die Schlüsselflächen (17) der Haltevorrichtung (16) auf das Drehmomentangriffsmittel (9), insbesondere die Mutter (10), übertragen wird, wobei im Wesentlichen nur die Drehenergie übertragen wird, wodurch der Spreizkörper (13) des Spreizankers (2) die Spreizhülse (12) im Bohrloch (34) aufspreizt und den Spreizanker (2) endfest verankert.
